# EUROPEAN PATENT APPLICATION

(11) **EP 1 879 244 A2**
(43) Date of publication of application: **16.01.2008**
(21) Application number: 07012537.2
(22) Date of filing: 26.06.2007
(51) Int. Cl.: H01M 4/02, H01M 10/40, H01M 4/50

(54) **Cell electrode**

(30) Priority: 14.07.2006 JP 2006194430
(71) Applicant: NISSAN MOTOR CO., LTD., Yokohama-shi Kanagawa-ken (JP)
(72) Inventor: Ogawa, Tomaru, Atsugi-shi Kanagawa 243-0192 (JP); Saito, Takamitsu, Atsugi-shi Kanagawa 243-0192 (JP); Miura, Tamaki, Atsugi-shi Kanagawa 243-0192 (JP); Kaneko, Taketo, Atsugi-shi Kanagawa 243-0192 (JP)
(74) Representative: Schaeberle, Steffen

(57) **Abstract**

A cell electrode of the present invention has a current collector (11) and an active material layer (13) formed on the current collector (11). The active material layer (13) contains: an active material in which a mean particle diameter is more than 1 µm to 5 µm or less and a BET specific surface area is 1 to 5 m²/g; and a conductive material of which content is 3 to 50 mass% with respect to 100 mass% of the active material.

## Description

### BACKGROUND OF THE INVENTION

### 1. Field of the Invention

The present invention relates to a cell electrode. In particular, the present invention relates to an improvement for enhancing output characteristics of a cell.

### 2. Description of the Related Art

In recent years, reduction of an amount of carbon dioxide has been eagerly desired in order to deal with the air pollution and global warming problems. In the automotive industry, expectations have been focused on the reduction of the amount of carbon dioxide, which is brought by introducing an electric vehicle (EV) and a hybrid electric vehicle (HEV). Then, a secondary battery to drive a motor (motor-driving secondary battery), which has the key to put the EV and the HEV into practical use, has been actively developed.

As the motor-driving secondary battery, a lithium-ion secondary battery having the highest theoretical energy among all batteries attracts attention, and is now being developed rapidly. In general, the lithium-ion secondary battery has.a configuration in which a positive electrode and a negative electrode are connected to each other while interposing an electrolyte layer therebetween and are housed in a cell casing. In this case, the positive electrode is formed by coating a positive electrode active material and the like on both surfaces of a positive current collector by using a binder, and the negative electrode is formed by coating a negative electrode active material and the like on both surfaces of a negative current collector by using the binder.

The lithium-ion secondary battery as described above, which is for use as a power supply to drive the motor of the automobile or the like, is required to have extremely high output characteristics in comparison with a consumer-oriented lithium-ion secondary battery for use in a cellular phone, a notebook personal computer, or the like. It is a current situation that research and development for such a secondary battery are diligently progressed.

Here, as a technology for enhancing the output characteristics of the lithium-ion secondary battery while bearing in mind that the lithium-ion secondary battery is to be mounted on the automobile, there is one described in Japanese Patent Unexamined Publication No. 2003-68300.

### BRIEF SUMMARY OF THE INVENTION

From a viewpoint of increasing the output of the battery, it is preferable to reduce a particle diameter of the active materials contained in active material layers of electrodes as described in Japanese Patent Unexamined Publication No. 2003-68300. However, excessive amounts of a conductive material and of the binder become necessary in order to efficiently construct a conductive network that contributes to the increase of the output. Accordingly, there has been a problem that a volume of each electrode is increased to decrease a capacity per volume. Moreover, in the case of using a composite oxide of lithium, nickel, and manganese, which is described in Japanese Patent Unexamined Publication No. 2003-68300, there has been a problem that thermal stability of each electrode is not sufficient.

The present invention has been made in consideration for the problems as described above, which are inherent in the related art. It is an object of the present invention to provide means in the lithium-ion secondary battery, which is capable of exhibiting excellent thermal stability and enhancing the output characteristic while suppressing the decrease of the capacity per volume to the minimum, in which the decrease occurs following the increase of the usage amount of the conductive material.

According to one aspect of the present invention, there is provided a cell electrode comprising: a current collector; and an active material layer formed on the current collector, the active material layer comprising: an active material in which a mean particle diameter is more than 1 µm to 5 µm or less and a BET specific surface area is 1 to 5 m²/g; and a conductive material of which content is 3 to 50 mass% with respect to 100 mass% of the active material.

### BRIEF DESCRIPTION OF THE SEVERAL VIEWS OF THE DRAWING

The invention will now be described with reference to the accompanying drawings wherein;
FIG. 1 is a cross-sectional view showing an embodiment (first embodiment) of a cell electrode of the present invention;
FIG. 2 is a cross sectional view showing a bipolar battery of a second embodiment;
FIG. 3 is a perspective view showing a battery pack of a third embodiment;
FIG. 4 is a schematic view of an automobile of a fourth embodiment, on which the battery pack of the third embodiment is mounted; and
FIG. 5 is a cross-sectional view showing an outline of a lithium-ion secondary battery that is not bipolar.

### DETAILED DESCRIPTION OF THE INVENTION

Hereinafter, description will be made of embodiments of the present invention with reference to the drawings.

### (First Embodiment)

### (Configuration)

A first aspect of the present invention is a cell electrode including: a current collector; and an active material layer formed on the current collector, and containing an active material in which a mean particle diameter is more than 1 µm to 5 µm or less and a BET specific surface area is 1 to 5 m²/g, and containing a conductive material of which content is 3 to 50 mass% with respect to 100 mass% of the active material.

First, a description will be made of a structure of a single cell using the cell electrode of the present invention with reference to the drawing. Note that the drawings are exaggerated for convenience of the explanation, and the technical scope of the present invention is not limited to embodiments shown in the drawings. Moreover, it is also possible to adopt embodiments which are not shown in the drawings.

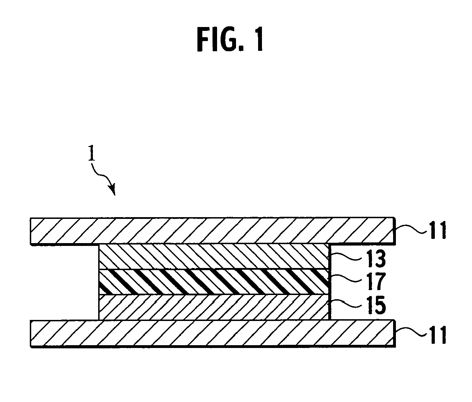

FIG. 1 is a cross-sectional view showing an embodiment of a single cell using the cell electrodes of the present invention. As shown in FIG. 1, a single cell 1 has a configuration in which a positive electrode having a positive electrode active material layer 13 formed on a current collector 11 and a negative electrode having a negative electrode active material layer 15 formed on another current collector 11 are stacked on each other while interposing an electrolyte layer 17 therebetween.

A description will be made below of an embodiment of the configuration of the cell using the cell electrodes of the present invention with reference to FIG. 1. The electrode of this embodiment has a feature in that, in each of the active material layers of both of the positive and the negative electrodes, the content of the conductive material to be described later and the mean particle diameter and BET specific surface area of the active material to be described later have the predetermined values described above. No particular limitations are imposed on selections of the current collectors, types of the active materials, a binder, supporting salt (lithium salt), electrolyte, and other compounds added according to needs. A description will be made below in detail of members composing the electrode for use in the present invention.

### [Current collector]

Each of the current collectors 11 is composed of a conductive material such as aluminum foil, nickel foil, copper foil, stainless steel (SUS) foil, and alloys of these. A general thickness of the current collector is 1 to 30 µm. However, a collector with a thickness out of this range may be used.

A size of the collector is decided in response to the usage purpose of the cell. If a large electrode for use in a large cell is fabricated, then a current collector with a large area is used. If a small electrode is fabricated, then a current collector with a small area is used.

### [Active material layer]

The active material layers 13, 15 are formed on the current collectors 11. The active material layers 13, 15 are layers containing the active materials playing a main role of charge/discharge reactions. In the present invention, any one or both of the positive electrode active material layer 13 and the negative electrode active material layer 15 contain the active materials in which the mean particle diameter is more than 1 µm to 5 µm or less and the BET specific surface area is 1 to 5 m²/g, and contain the conductive material of which content is 3 to 50 mass% with respect to 100 mass% of the active materials. When the electrode of the present invention is used as the positive electrode, the active material layer contains the positive electrode active material. Meanwhile, when the electrode of the present invention is used as the negative electrode, the active material layer contains the negative electrode active material.

As the positive electrode active material, there are illustrated a lithium-manganese composite oxide, a lithium-nickel composite oxide, a lithium-cobalt composite oxide, a lithium-containing iron oxide, a lithium-nickel-cobalt composite oxide, a lithium-manganese-cobalt composite oxide, a lithium-nickel-manganese-cobalt composite oxide, a lithium and metal phosphate compound, a lithium and transition metal sulfate compound, and the like. Depending on the case, two or more types of the positive electrode active materials may be used in combination.

As the negative electrode active material, there are illustrated a carbon material such as graphite and amorphous carbon, the lithium and transition metal sulfate compound, a metal material, a lithium alloy such as a lithium-aluminum alloy, a lithium-tin alloy, and a lithium-silicon alloy, and the like. Depending on the case, two or more types of the negative electrode active materials may be used in combination.

In the single cell 1 of the lithium-ion secondary battery of this embodiment, the mean particle diameter of the positive electrode active material contained in the positive electrode active material layer 13 is more than 1 µm to 5 µm or less. Preferably, the mean particle diameter is more than 1 µm to 3 µm or less. When the mean particle diameter is 1 µm or less, in some cases, coagulation of the active material occurs, and a reactive surface area of the active material is decreased. When the mean particle diameter exceeds 5 µm, a diffusion rate of lithium ions slows down in some cases. Note that, in this application, for the mean particle diameter of the active material, a value (D50) of a 50% cumulative particle diameter (median diameter), which is measured by a laser diffraction grain distribution measuring device, is employed.

Meanwhile, in the single cell 1 of the lithium-ion secondary battery of this embodiment, the mean particle diameter of the negative electrode active material contained in the negative electrode active material layer 15 is more than 1 µm to 5 µm or less. Preferably, the mean particle diameter is more than 1 µm to 3 µm or less. When the mean particle diameter is 1 µm or less, in some cases, the coagulation of the active material occurs, and a reactive surface area of the active material is decreased. When the mean particle diameter exceeds 5 µm, the diffusion rate of the lithium ions slows down in some cases.

Moreover, the BET specific surface area of each of the active materials is 1 to 5 m²/g. When the BET specific surface area is less than 1 m²/g, this is not preferable since the reactive surface area of the active material is decreased. When the BET specific surface area exceeds 5 m²/g, this is not preferable since a large amount of the binder required in the case of fabricating the electrode becomes necessary. From a viewpoint of reducing reaction resistance of the cell and enhancing an energy density, it is preferable that the BET specific surface area of the active material be 2 to 4 m²/g.

Moreover, each of the active material layers contains the conductive material. The conductive material refers to an additive blended in order to enhance conductivity of the active material layer. As examples of the conductive material, there are mentioned graphite, carbon black, carbon fiber, acetylene black, potassium titanate, titanium carbide, titanium dioxide, silicon carbide, zinc oxide, magnesium oxide, tin dioxide, indium oxide, and the like.

The content of the conductive material is 3 to 50 mass% with respect to 100 mass% of the active material. When the content of the conductive material is less than 3 mass%, this is not preferable since conductivity of the active material sometimes becomes insufficient. When the content of the conductive material exceeds 50 mass%, this is not preferable since the energy density becomes low. From viewpoints of the conductivity and the energy density, the content of the conductive material is preferably 5 to 30 mass%, more preferably, 7 to 15 mass%.

According to needs, other materials may be contained in the active material layers 13, 15. For example, the binder, the supporting salt (lithium salt), ion-conductive polymer, and the like can be contained. Moreover, when the ion-conductive polymer is contained, a polymerization initiator for polymerizing the polymer may be contained.

The binder refers to an additive blended in order to accomplish a role of binding the active material and the conductive material in the active material layers. As specific examples of the binder, there are preferably mentioned thermoplastic resin such as polyvinylidene fluoride (PVdF), polyvinyl acetate, polyimide and urea resin, thermosetting resin such as an epoxy resin and a polyurethane resin, and rubber material such as a butyl rubber and a styrene rubber.

As the supporting salt (lithium salt), there are mentioned Li(C₂F₅SO₂)₂N, LiPF₆, LiBF₄, LiClO₄, LiAsF₆, LiCF₃SO₃, and the like.

As the ion-conductive polymer, for example, there are mentioned polyethylene oxide (PEO) polymer and polypropylene oxide (PPO) polymer. Here, the polymer may be the same as or different from ion-conductive polymer for use in an electrolyte layer of the cell for which the electrode of the present invention is employed; however, it is preferable that the polymer be the same.

The polymerization initiator is blended in order to act on cross-link groups of the ion-conductive polymer and to progress a cross-link reaction thereof. The polymerization initiator is classified into a photopolymerization initiator, a thermal polymerization initiator, and the like in response to external factors which allow the initiator to exert a function thereof. As the polymerization initiator, for example, there are mentioned azobisisobutyronitrile (AIBN) as the thermal polymerization initiator, benzyl dimethyl ketal (BDK) as the photopolymerization initiator, and the like.

Blend ratios of the other components than the conductive material, which are contained in the active material layers 13, 15, are not particularly limited, and can be adjusted by appropriately referring to the publicly known knowledge about the lithium-ion secondary battery.

A thickness of the active material layers 13, 15 is not particularly limited, either, and the conventionally known knowledge in public about the lithium-ion secondary battery can be appropriately referred to. When an example of the thickness is mentioned, the thickness of the active material layers 13, 15 is preferably around 10 to 100 µm, more preferably, 10 to 50 µm. If the thickness of the active material layers 13, 15 is around 10 µm or more, then a battery capacity can be ensured sufficiently. Meanwhile, if the thickness of the active material layers 13, 15 is around 100 µm or less, then a problem of an increase of internal resistance, which follows by the fact that it becomes difficult for the lithium ions to diffuse into a deep portion of the electrode (on the current collector side), can be suppressed from occurring.

In each of both of the active material layers on the positive and negative electrodes, the electrode of this embodiment contains the active material in which the mean particle diameter is more than 1 µm to 5 µm or less and the BET specific surface area is 1 to 5 m²/g, and contains the conductive material of which content is 3 to 50 mass% with respect to 100 mass% of the active material. However, the technical scope of the present invention is not limited only to such an embodiment as described above, and can also incorporate therein an embodiment in which the above-described active material and conductive material are contained in only any one of the positive and negative electrodes.

### (Manufacturing method)

Subsequently, a description will be made of a manufacturing method of the cell electrode of the present invention. First, a description will be made of a manufacturing method of the single cell 1 of the embodiment shown in FIG. 1.

The electrode of the present invention can be manufactured, for example, in the following manner. First, the active material and the conductive material are added to a solvent, whereby slurry of the active material is prepared (active material slurry preparation step). Then, the active material slurry is coated on a surface of the current collector, followed by drying, whereby a coating film is formed (coating film formation step). Finally, a stacked body fabricated through the coating film formation step is pressed in a stack direction (pressing step). When the ion-conductive polymer is added to the active material slurry, and the polymerization initiator is further added for the purpose of causing the cross-link reaction for the ion-conductive polymer, polymerization treatment may be implemented at the same time when the drying in the coating film formation step is performed, or before or after the drying.

A description will be made in detail of such a manufacturing method in order of steps; however, the present invention is not limited only to an embodiment to be described below.

### [Active material slurry preparation step]

In this step, a desired active material, a desired conductive material, and other components according to needs (for example, binder, ion conductive polymer, supporting salt (lithium salt), polymerization initiator, and the like) are mixed together in the solvent, whereby the active material slurry is prepared. Specific embodiments of the respective components blended into the active material slurry are as described in the column about the configuration of the electrode of the present invention, and accordingly, a detailed description thereof will be omitted here.

A type of the solvent and a mixing unit therefor are not particularly limited, and the conventionally known knowledge in public about the manufacture of the electrode can be appropriately referred to. As examples of the solvent for use, there are mentioned N-methyl-2-pyrrolidone (NMP), dimethylformamide, dimethylacetoamide, methylformamide, and the like. When polyvinylidene fluoride (PVdF) is employed as the binder, it is recommended to use NMP as the solvent.

### [Coating film formation step]

Subsequently, the current collector is prepared, and the active material slurry prepared in the above-described step is coated on the surface of the current collector, and is then dried. In such a way, the coating film made of the active material slurry is formed on the surface of the current collector. This coating film becomes the active material layer through the pressing step to be described later.

A specific embodiment of the prepared current collector is as described in the column about the configuration of the electrode of the present invention, and accordingly, a detailed description thereof will be omitted here.

A coating unit for coating the active material slurry is not particularly limited, either; however, for example, a generally used coating unit such as an autonomic coater can be employed.

The coating film is formed in response to a desired arrangement embodiment of the current collector and the active material layer in the manufactured electrode. For example, when the manufactured electrode is a bipolar electrode, a coating film containing the positive electrode active material is formed on one surface of the current collector, and a coating film containing the negative electrode active material is formed on the other surface. As opposed to this, when an electrode that is not bipolar is manufactured, a coating film containing any one of the positive electrode active material and the negative electrode active material is formed on both surfaces of one current collector.

Thereafter, the coating film formed on the surface of such a current collector is dried. In such a way, the solvent in the coating film is removed.

A drying unit for drying the coating film is not particularly limited, either, and the conventionally known knowledge in public about the manufacture of the electrode can be appropriately referred to. For example, heating treatment is illustrated. Drying conditions (drying time, drying temperature, and the like) can be appropriately set in response to a coating amount of the active material slurry and a volatilization rate of the solvent in the slurry.

When the coating film contains the polymerization initiator, a polymerization step is further performed, whereby the ion-conductive polymer in the coating film is cross-linked by the cross-link groups.

Such polymerization treatment in the polymerization step is not particularly limited, either, and the conventionally known knowledge in public just needs to be appropriately referred to. For example, when the coating film contains the thermal polymerization initiator (AIBN or the like), heat treatment is implemented for the coating film. Moreover, when the coating film contains the photopolymerization initiator (BDK or the like), light such as an ultraviolet ray is irradiated onto the coating film. Note that the heat treatment for the thermal polymerization may be performed simultaneously with the above-described drying step, or may be performed before or after the drying step.

### [Pressing step]

Subsequently, the stacked body fabricated through the coating film formation step is pressed in the stack direction. In such a way, the cell electrode of the present invention is completed. In this case, a porosity of the active material layer can be controlled by adjusting pressing conditions.

Specific unit and pressing conditions for such pressing treatment are not particularly limited, and can be appropriately adjusted so that the porosity of the active material layer after the pressing treatment can have a desired value. As specific units for the pressing treatment, for example, there are mentioned a hot press machine, a calendar roll press machine, and the like. Moreover, the pressing conditions (temperature, pressure, and the like) are not particularly limited, either, and the conventionally known knowledge in public can be appropriately referred to.

### (Second Embodiment)

In a second embodiment, the lithium-ion secondary battery is composed by using the cell electrode of the above-described first embodiment. Specifically, a second aspect of the present invention is a lithium-ion secondary battery including at least one single cell layer formed by stacking the positive electrode, the electrolyte layer, and the negative electrode in this order, in which at least one of the positive electrode or the negative electrode is the cell electrode of the present invention. The electrode of the present invention can be applied to any of the positive electrode, the negative electrode, and the bipolar electrode. The lithium-ion secondary battery including the electrode of the present invention as at least one electrode belongs to the technical scope of the present invention. However, preferably, all the electrodes composing the lithium-ion secondary battery are the electrodes of the present invention. By adopting such a configuration, the output characteristics of the lithium-ion secondary battery can be enhanced effectively.

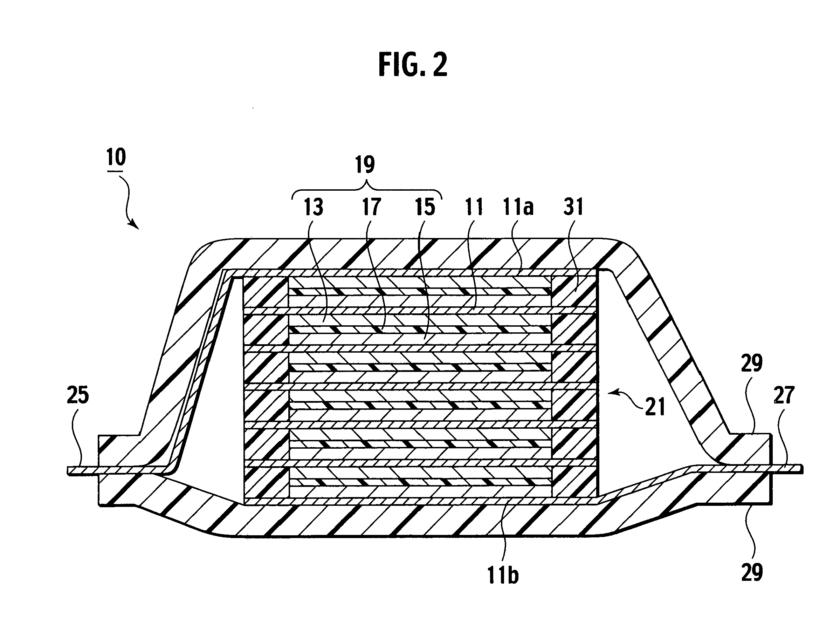

The battery of the present invention can be a bipolar lithium-ion secondary battery (hereinafter, also referred to as a "bipolar battery"). FIG. 2 is a cross-sectional view showing the lithium-ion secondary battery according to the second aspect of the present invention, which is the bipolar battery. A description will be made below in detail of the second embodiment by taking as an example the case of the bipolar battery shown in FIG. 2; however, the technical scope of the present invention is not limited only to such an embodiment.

A bipolar battery 10 of this embodiment, which is shown in FIG. 2, has a configuration in which a substantially rectangular battery element 21 where the charge/discharge reactions actually advance is sealed in an inside of a laminate sheet 29 as a package.

As shown in FIG. 2, the battery element 21 of the bipolar battery 10 of this embodiment includes a plurality of the bipolar electrodes, in each of which the positive electrode active material layer 13 and the negative electrode active material layer 15 are formed on the respective surfaces of the current collector 11. The respective bipolar electrodes are stacked on one another while interposing the electrolyte layers 17 thereamong, and thereby form the battery element 21. In this case, the respective bipolar electrodes and the electrolyte layers 17 are stacked so that the positive electrode active material layer 13 of one bipolar electrode can be opposed to the negative electrode active material layer 15 of the other bipolar electrode adjacent to the one bipolar electrode while interposing the electrolyte layer 17 therebetween.

Then, the positive electrode active material layer 13, the electrolyte layer 17, and the negative electrode active material layer 15, which are adjacent to one another, compose one single cell layer 19. Hence, it can also be said that the bipolar battery 10 has a configuration formed by stacking the single cell layers 19 on one another. Moreover, on outer circumferences of the single cell layers 19, insulating layers 31 for insulating the adjacent current collectors 11 from one another are provided. Note that, in each of the current collectors (outermost current collectors) 11a, 11b located on the outermost layers of the battery element 21, only on one surface thereof, any one of the positive electrode active material layer 13 and the negative electrode active material layer 15 is formed.

Moreover, in the bipolar battery 10 shown in FIG. 2, the positive-side outermost current collector 11a is extended to be formed into a positive tab 25, and is drawn out from the laminate sheet 29 as the package. Meanwhile, the negative-side outermost current collector 11b is extended to be formed into a negative tab 27, and is drawn out from the laminate sheet 29 in as similar way.

A description will be briefly made of members composing the bipolar battery 10 of this embodiment. However, since the components composing each electrode are as described above, a description thereof will be omitted here. Moreover, the technical scope of the present invention is not limited only to the embodiment to be described below, and the conventionally known embodiment in public can be employed in a similar way.

### [Electrolyte layer]

As electrolyte composing each electrolyte layer 17, liquid electrolyte or polymer electrolyte can be used.

The liquid electrolyte has a form in which the lithium salt as the supporting salt is dissolved into an organic solvent as a plasticizer. As the organic solvent for use as the plasticizer, for example, carbonates such as ethylene carbonate (EC) and propylene carbonates (PC) are illustrated. Moreover, as the supporting salt (lithium salt), a compound such as LiBETI (Li(C₂F₅SO₂)₂N), which can be added to the active material layer of the electrode, can be employed in a similar way.

Meanwhile, the polymer electrolyte is classified into gel electrolyte that contains an electrolysis solution and all solid polymer electrolyte that does not contain the electrolysis solution.

The gel electrolyte has a configuration formed by injecting the above-described liquid electrolyte into matrix polymer made of the ion-conductive polymer. As the ion-conductive polymer for use as the matrix polymer, for example, polyethylene oxide (PEO), polypropylene oxide (PPO), copolymer of these, and the like are mentioned. Electrolyte salt such as the lithium salt can be dissolved into such polyalkylene oxide polymer well.

Note that, when each electrolyte layer 17 is composed of the liquid electrolyte or the gel electrolyte, a separator may be used as the electrolyte layer 17. As a specific embodiment of the separator, for example, a microporous film made of polyolefin such as polyethylene and polypropylene is mentioned.

The all solid polymer electrolyte has a configuration formed by dissolving the supporting salt (lithium salt) into the above-described matrix polymer, and the all solid polymer electrolyte does not contain the organic solvent as the plasticizer. Hence, when the electrolyte layer 17 is composed of the all solid polymer electrolyte, there is no apprehension about liquid leakage from the battery, and reliability of the battery can be enhanced.

The matrix polymer of the gel electrolyte or the all solid polymer electrolyte can exert excellent mechanical strength by forming a cross-link structure. In order to form the cross-link structure, polymerization treatment such as thermal polymerization, ultraviolet polymerization, radiation polymerization, and electron beam polymerization just needs to be implemented for polymeric polymer (for example, PEO and PPO) for forming the polymer electrolyte by using an appropriate polymerization initiator.

### [Insulating layer]

In the bipolar battery 10, in usual, the insulating layer 31 is provided on the circumference of each single cell layer 19. This insulating layer 31 is provided for the purpose of preventing mutual contact between the adjacent current collectors 11 in the battery and an occurrence of short circuit owing to slight irregularities of end portions of the single cell layers 19 in the battery element 21. By placing such insulating layers 31, long-term reliability and safety are ensured, whereby the bipolar battery 10 that is high quality can be provided.

Each insulating layer 31 just needs to be the one having insulating property, sealing property against detachment of the solid electrolyte, sealing property (hermetic sealing property) against permeation of moisture from the outside, heat resistance under a battery operation temperature, and the like. For example, a urethane resin, an epoxy resin, a polyethylene resin, a polypropylene resin, a polyimide resin, rubber, and the like are used. Among them, the urethane resin and the epoxy resin are preferable from viewpoints of corrosion resistance, chemical resistance, forming easiness (film forming property), cost efficiency, and the like.

### [Tab]

In the bipolar battery 10, the tabs (positive tab 25 and negative tab 27) electrically connected to the outermost current collectors 11a, 11b for the purpose of extracting a current to the outside of the battery are drawn outside of the package. Specifically, the positive tab 25 electrically connected to the positive outermost current collector 11a and the negative tab 27 electrically connected to the negative outermost current collector 11b are drawn outside of the package.

A material of the tabs (positive tab 25 and negative tab 27) is not particularly limited, and the publicly known material heretofore used as tabs for the bipolar battery can be used. For example, aluminum, copper, titanium, nickel, stainless steel (SUS), alloys of these, and the like are illustrated. Note that, for the positive tab 25 and the negative tab 27, the same material may be used, or different materials may be used. Note that the tabs 25, 27 may be formed by extending the outermost current collectors 11a, 11b as in this embodiment, or tabs prepared separately may be connected to the outermost current collectors.

### [Package]

In the bipolar battery 10, preferably, the battery element 21 is housed in the package such as the laminate sheet 29 in order to prevent an external impact while the battery is being used and a deterioration resulting from environmental factors. The package is not particularly limited, and the conventionally known package in public can be used. Preferably, a polymer-metal composite laminate sheet and the like can be used from a viewpoint that heat is efficiently transmitted from a heat source of the automobile to make it possible to rapidly heat up the inside of the battery to a battery operation temperature.

### (Third Embodiment)

In a third embodiment, an assembled battery is composed by parallelly and/or serially connecting a plurality of the bipolar batteries of the above-described second embodiment.

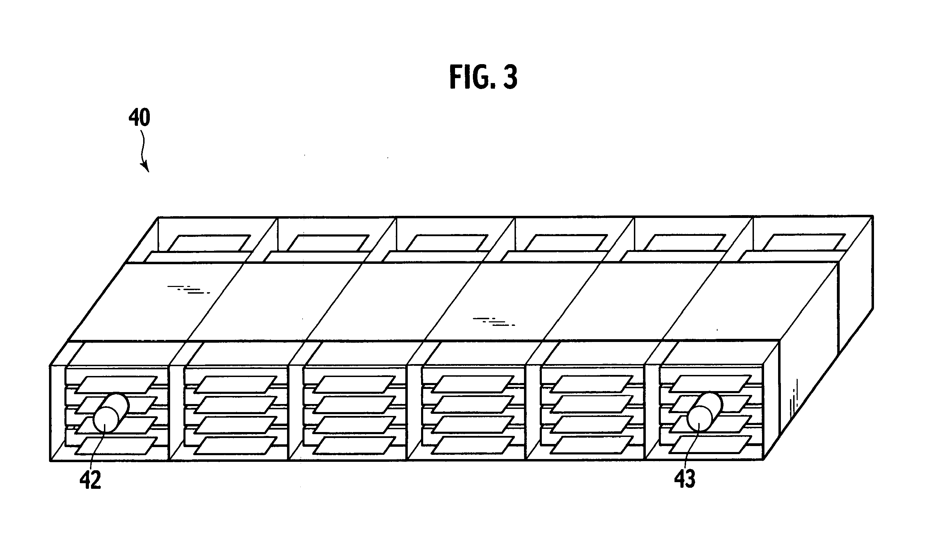

FIG. 3 is a perspective view showing the assembled battery of this embodiment. As shown in FIG. 3, an assembled battery 40 is composed by connecting the plurality of bipolar batteries described in the second embodiment to one another. The bipolar batteries 10 are connected to one another by interconnecting the positive tabs 25 of the respective bipolar batteries 10 by using a bus bar, and by interconnecting the negative tabs 27 thereof by using a bus bar. On one side surface of the assembled battery 40, electrode terminals 42 and 43 are provided as electrodes of the entirety of the assembled battery 40.

A connection method when the plurality of bipolar batteries 10 composing the assembled battery 40 are connected to one another is not particularly limited, and the conventionally known method in public can be appropriately employed. For example, a method using welding such as ultrasonic welding and spot welding and a fixing method using rivets, caulkings, and the like can be used. In accordance with such a connection method, long-term reliability of the assembled battery 40 can be enhanced.

In accordance with the assembled battery 40 of this embodiment, since the individual bipolar batteries 10 composing the assembled battery 40 have the excellent output characteristics, an assembled battery excellent in output characteristics can be provided.

Note that, with regard to the connection among the bipolar batteries 10 composing the assembled battery 40, all the plural bipolar batteries 10 may be parallelly connected or serially connected, or such serial connection and parallel connection may be combined.

### (Fourth Embodiment)

In a fourth embodiment, the bipolar battery 10 of the second embodiment or the assembled battery 40 of the third embodiment is mounted as a motor-driving power supply, whereby a vehicle is composed. As the vehicle using the bipolar battery 10 or the assembled battery 40 as the motor-driving power supply, for example, there is mentioned a vehicle in which wheels are driven by a motor, such as a pure electric vehicle that does not use gasoline, a hybrid vehicle such as a series hybrid vehicle and a parallel hybrid vehicle, and a fuel cell electric vehicle.

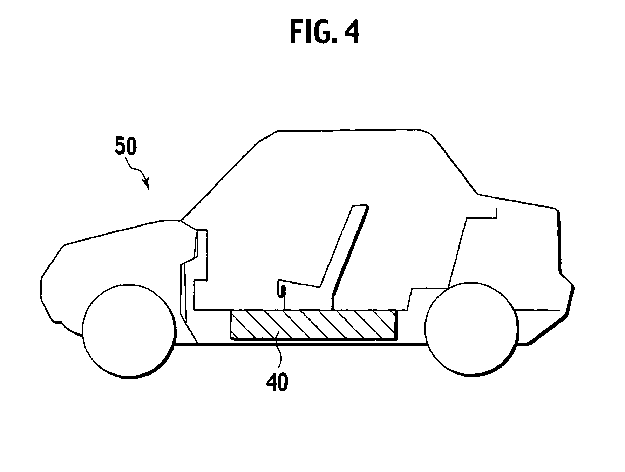

Just for reference, a schematic view of an automobile 50 that mounts the assembled battery 40 thereon is shown in FIG. 4. The assembled battery 40 mounted on the automobile 50 has such characteristics as describe above. Accordingly, the automobile 50 that mounts the assembled battery 40 thereon is excellent in output characteristics.

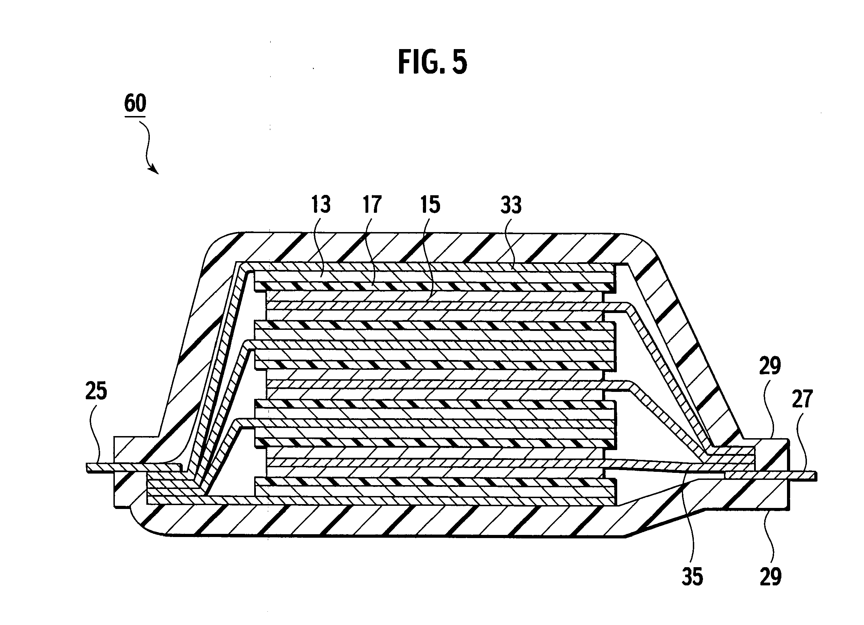

As above, some preferred embodiments of the present invention have been shown; however, the present invention is not limited to the above embodiments, and various modifications, omissions and additions are possible by those skilled in the art. For example, the above-described second embodiment has been described by taking as an example the case of the bipolar lithium-ion secondary battery (bipolar battery); however, the technical scope of the battery of the present invention is not limited only to the bipolar battery, and for example, the battery of the present invention may be a lithium-ion secondary battery that is not bipolar. Just for reference, a cross-sectional view showing an outline of a lithium-ion secondary battery 60 that is not bipolar is shown in FIG. 5. Note that, in FIG. 5, reference numeral 33 denotes positive current collectors, and reference numeral 35 denotes negative current collectors.

A description will be made of the effects of the present invention by using Examples and Comparative examples, which are to be described below. Note that the technical scope of the present invention is not limited only to such following examples.

### <Example 1 >

### (Fabrication of positive electrode)

A lithium-manganese composite oxide (85 mass%) in which a mean particle diameter D50 (50% cumulative particle diameter) is 4.9 µm and a BET specific surface area is 1.1 m²/g was prepared as the positive electrode active material. Carbon black (5 mass%) was prepared as the conductive material. Polyvinylidene fluoride (PVdF) (10 mass%) was prepared as the binder.

Anhydrous NMP with a purity of 99.9% was poured into a dispersing mixer, and next, PVdF was put thereinto. Then, PVdF was dissolved sufficiently into NMP. Thereafter, the lithium-manganese composite oxide and the carbon black were added little by little to a mixture obtained by the dissolution, and were made affinitive for NMP. Next, NMP was further added to adjust a viscosity of the mixture, whereby slurry (hereinafter, referred to as positive slurry) was obtained.

The positive slurry prepared as above was coated on aluminum foil (thickness: 120 µm) as the positive current collector by the doctor blade method, was dried on a hot stirrer, and a stacked body was thereby obtained.

Subsequently, the obtained stacked body was pressed by using a roll press machine, whereby a film thickness of a positive electrode active material layer was set at 15 µm.

An output terminal was connected to the current collector, whereby a positive electrode to be tested was fabricated.

### (Preparation of electrolysis solution)

Ethylene carbonate (EC) and propylene carbonate (PC) were mixed together at a volume ratio of 1: 1, thereby obtaining a plasticizer (organic solvent) of an electrolysis solution. Subsequently, LiPF₆ as lithium salt was added to the plasticizer so that a concentration thereof could be 1M, whereby the electrolysis solution was prepared.

### (Fabrication of battery to be evaluated)

The positive electrode to be tested, which was fabricated as above, was stamped into a disc with a diameter of 15 mm, metal Li as a negative electrode was stamped into a disc with a diameter of 16 mm, and electrodes to be tested were fabricated. Between these electrodes to be tested, a polyethylene-made microporous film (thickness: 25 µm; diameter: 18 mm) as a separator for a lithium-ion battery was sandwiched. Subsequently, such a sandwiched body thus obtained was inserted into an aluminum laminate pack as a package material of which three sides have already been sealed. Thereafter, the electrolysis solution prepared as above was injected into the aluminum laminate pack, and the pack was vacuum-sealed so that the output terminals could be exposed from the pack. In such a way, a laminate cell to be evaluated was completed.

### <Example 2>

A laminate cell to be evaluated was fabricated by a similar method to that of Example 1 except that the mass ratio of the lithium-manganese composite oxide, the carbon black and PVdF was set at 80: 10: 10.

### <Example 3>

A laminate cell to be evaluated was fabricated by a similar method to that of Example 1 except that the mass ratio of the lithium-manganese composite oxide, the carbon black and PVdF was set at 70: 20: 10.

### <Example 4>

A laminate cell to be evaluated was fabricated by a similar method to that of Example 1 except that a lithium-manganese composite oxide in which a mean particle diameter D50 (50% cumulative particle diameter) is 3.2 µm and a BET specific surface area is 2.0 m²/g was used as the positive electrode active material, and that the film thickness of the positive electrode active material layer was set at 30 µm.

### <Example 5>

A laminate cell to be evaluated was fabricated by a similar method to that of Example 1 except that a lithium-manganese composite oxide in which a mean particle diameter D50 (50% cumulative particle diameter) is 2.3 µm and a BET specific surface area is 3.2 m²/g was used as the positive electrode active material, that the mass ratio of the lithium-manganese composite oxide, the carbon black and PVdF was set at 80: 10: 10, and that the film thickness of the positive electrode active material layer was set at 30 µm.

### <Example 6>

A laminate cell to be evaluated was fabricated by a similar method to that of Example 1 except that a lithium-manganese composite oxide in which a mean particle diameter D50 (50% cumulative particle diameter) is 1.5 µm and a BET specific surface area is 3.5 m²/g was used as the positive electrode active material, and that the mass ratio of the lithium-manganese composite oxide, the carbon black and PVdF was set at 70: 20: 10.

### <Comparative example 1>

A laminate cell to be evaluated was fabricated by a similar method to that of Example 1 except that a lithium-manganese composite oxide in which a mean particle diameter D50 (50% cumulative particle diameter) is 10.5 µm and a BET specific surface area is 0.8 m²/g was used as the positive electrode active material, and that the mass ratio of the lithium-manganese composite oxide, the carbon black and PVdF was set at 80: 10: 10.

### <Comparative example 2>

A laminate cell to be evaluated was fabricated by a similar method to that of Example 1 except that the mass ratio of the lithium-manganese composite oxide and PVdF was set at 90: 10.

### <Comparative example 3>

A laminate cell to be evaluated was fabricated by a similar method to that of Example 1 except that a lithium-manganese composite oxide in which a mean particle diameter D50 (50% cumulative particle diameter) is 0.7 µm and a BET specific surface area is 5.5 m²/g was used as the positive electrode active material, that the mass ratio of the lithium-manganese composite oxide, the carbon black and PVdF was set at 70: 20: 10, and that the film thickness of the positive electrode active material layer was set at 30 µm.

### <Comparative example 4>

A laminate cell to be evaluated was fabricated by a similar method to that of Example 1 except that the mass ratio of the lithium-manganese composite oxide, the carbon black and PVdF was set at 50: 30: 20.

### <Evaluation of cell characteristics of laminate cells to be evaluated>

### (Calculation of capacity retention)

Discharge capacities were individually measured for the laminate cells fabricated in the above-described respective examples under conditions where a temperature was 20°C, a current value was 100 µA (equivalent to 0.2 C), and a current value was 25 mA (equivalent to 50 C). The obtained discharge capacities when the current value was 50 C were divided by the discharge capacities when the current value was 0.2 C, and values obtained by the division were defined as capacity retentions.

### (Calculation of discharge capacity per volume of positive electrode)

Values of the discharge capacities, which were obtained in such measurement for the charge/discharge characteristics, were divided by volumes of the positive electrodes of the respective cells, and values of the respective cells, which were obtained by the division, were defined as capacities per volume of the positive electrodes. Results are shown in the following Table 1.

**Table 1**

| | Particle diameter of positive electrode active material (µm) | Amount of conductive material with respect to 100 mass% of positive electrode active material | BET specific surface area (m²/g) | Film thickness of positive electrode active material layer (µm) | Capacity retention (%) | Discharge capacity per volume of positive electrode (mAh/ml) |
|---|---|---|---|---|---|---|
| Example 1 | 4.9 | 5.9 | 1.1 | 15 | 65 | 255 |
| Example 2 | 4.9 | 12.5 | 1.1 | 15 | 70 | 220 |
| Example 3 | 4.9 | 28.5 | 1.1 | 15 | 75 | 190 |
| Example 4 | 3.2 | 12.5 | 2.0 | 30 | 75 | 250 |
| Example 5 | 2.3 | 28.5 | 3.2 | 30 | 80 | 200 |
| Example 6 | 1.5 | 5.9 | 3.5 | 15 | 75 | 265 |
| Comparative example 1 | 10.5 | 12.5 | 0.8 | 15 | 55 | 212.2 |
| Comparative example 2 | 4.9 | 0 | 1.1 | 15 | 8 | 277 |
| Comparative example 3 | 0.7 | 28.5 | 5.5 | 30 | 44 | 177 |
| Comparative example 4 | 4.9 | 60 | 1.1 | 15 | 95 | 127 |

As shown in the above Table 1, it is understood that the capacity retentions and the discharge capacities per volume of the positive electrodes exhibit high values in all Examples, and that the capacity retentions and the capacities per volume of the positive electrodes become high particularly when the particle diameter of the active material is within a range of more than 1 µm to 3 µm or less and when the BET specific surface area is within a range of 2 to 4 m²/g. Meanwhile, in Comparative examples 1 and 3 in each of which the particle diameter of the positive electrode active material and the BET specific surface area are out of the scope of the present invention, values of the capacity retentions became low. Moreover, in Comparative example 2 in which the conductive material is not contained, the capacity retention was extremely low, and in Comparative example 4 in which the amount of conductive material is too large, the discharge capacity per volume of the positive electrode was low.

### <Example 7>

A laminate cell to be evaluated was fabricated by a similar method to that of Example 1 except that a lithium-manganese composite oxide (80 mass%) in which a mean particle diameter D50 (50% cumulative particle diameter) is 4.9 µm and a BET specific surface area is 1.1 m²/g was used as the positive electrode active material, carbon black (10 mass%) was used as the conductive material, and polyvinylidene fluoride (PVdF) (10 mass%) was used as the binder, and that a negative electrode was fabricated by the following method.

### (Fabrication of negative electrode)

An appropriate amount of NMP as the slurry viscosity adjustment solvent was added to a solid content made of hard carbon (mean particle diameter: 10 µm) (90 mass%) as the negative electrode active material and PVdF (10 mass%) as the binder, and slurry of the negative electrode was prepared.

The slurry of the negative electrode, which was prepared as above, was coated on copper foil as the negative current collector by using a bar coater, followed by drying. Subsequently, the dried negative electrode was pressed by using a press machine, and an output terminal was connected to the current collector. In such a way, a negative electrode to be tested was fabricated.

### <Example 8>

A laminate cell to be evaluated was fabricated by a similar method to that of Example 7 except that a lithium-manganese composite oxide in which a mean particle diameter D50 (50% cumulative particle diameter) is 3.2 µm and a BET specific surface area is 2.0 m²/g was used as the positive electrode active material.

### <Example 9>

A laminate cell to be evaluated was fabricated by a similar method to that of Example 7 except that a lithium-manganese composite oxide in which a mean particle diameter D50 (50% cumulative particle diameter) is 2.3 µm and a BET specific surface area is 3.2 m²/g was used as the positive electrode active material.

### <Example 10>

A laminate cell to be evaluated was fabricated by a similar method to that of Example 7 except that a lithium-manganese composite oxide in which a mean particle diameter D50 (50% cumulative particle diameter) is 1.2 µm and a BET specific surface area is 3.9 m²/g was used as the positive electrode active material.

### <Comparative example 5>

A laminate cell to be evaluated was fabricated by a similar method to that of Example 7 except that a lithium-manganese composite oxide in which a mean particle diameter D50 (50% cumulative particle diameter) is 10.5 µm and a BET specific surface area is 0.8 m²/g was used as the positive electrode active material.

### <Comparative example 6>

A laminate cell was fabricated by a similar method to that of Example 7 except that a lithium-manganese composite oxide in which a mean particle diameter D50 (50% cumulative particle diameter) is 0.7 µm and a BET specific surface area is 5.5 m²/g was used as the positive electrode active material.

### (Charge/discharge test)

Charge/discharge tests were performed for the cells fabricated in Examples 7 to 10 and Comparative examples 5 and 6 by the following method.

For such samples, initial charge was performed at a constant current of 2 C, and discharge was performed at a constant current of 0.5 C. Then, 10 cycles of the charge/discharge tests were performed at a constant current of 1 C. Thereafter, resistances of the cells at the current of 1 C were measured. Relative values of the cell resistances of the respective cells were calculated when a value of the cell resistance in Comparative example 5 was 100. Results are shown in the following Table 2.

**Table 2**

| | Particle diameter of positive electrode active material (µm) | Specific surface area (m²/g) | Cell resistance (relative value) |
|---|---|---|---|
| Example 7 | 4.9 | 1.1 | 96 |
| Example 8 | 3.2 | 2.0 | 88 |
| Example 9 | 2.3 | 3.2 | 89 |
| Example 10 | 1.2 | 3.9 | 87 |
| Comparative example 5 | 10.5 | 0.8 | 100 |
| Comparative example 6 | 0.7 | 5.5 | 114 |

As shown in the above Table 2, it is understood that the cell resistances exhibit lower values in all Examples than in Comparative examples, and that the cell resistances are low particularly when the particle diameter of the active material is within a range of more than 1 µm to 3 µm or less. It is understood that, in Comparative example 6, the cell resistance is increased to a large extent though the particle diameter of the positive electrode active material is smaller than in Example 10. This is considered to be because, since the specific surface area of the positive electrode active material of Comparative example 6 is large, the surface energy is increased, the active material is prone to be mutually coagulated, and the amount of carbon black as the conductive material in the positive electrode is insufficient with respect to the positive electrode active material.

It is understood that, as described above, the electrode of the present invention, which is described in this embodiment, exhibits excellent battery characteristics. It is understood that, in particular, the particle diameter of the positive electrode active material is set at more than 1 µm to 5 µm or less, and the BET specific surface area is set at 1 to 5 m²/g, whereby a battery having good output characteristics can be obtained.

The entire content of a Japanese Patent Application No. P2006-194430 with a filing date of July 14, 2006 is herein incorporated by reference.

Although the invention has been described above by reference to certain embodiments of the invention, the invention is not limited to the embodiments described above and modifications may become apparent to these skilled in the art, in light of the teachings herein. The scope of the invention is defined with reference to the following claims.

## Claims

1. A cell electrode, comprising:
a current collector (11, 11a, 11b, 33, 35); and
an active material layer (13, 15) formed on the current collector (11, 11a, 11b, 33, 35), the active material layer (13, 15) comprising:
an active material in which a mean particle diameter is more than 1 µm to 5 µm or less and a BET specific surface area is 1 to 5 m²/g; and
a conductive material of which content is 3 to 50 mass% with respect to 100 mass% of the active material.

2. The cell electrode according to claim 1,
wherein the mean particle diameter of the active material is 3 µm or less.

3. The cell electrode according to claim 1 or 2,
wherein the BET specific surface area of the active material is 2 to 4 m²/g.

4. The cell electrode according to any one of claims 1 to 3,
wherein the content of the conductive material is 5 to 30 mass% with respect to 100 mass% of the active material

5. A lithium-ion secondary battery, comprising:
at least one single cell layer (19) formed by stacking a positive electrode (13), an electrolyte layer (17) and a negative electrode (15) in this order,
wherein at least one of the positive and negative electrodes (13, 17) is the cell electrode according to any one of claims 1 to 4.

6. The lithium-ion secondary battery according to claim 5,
wherein the electrolyte layer (17) contains liquid electrolyte, gel electrolyte, or all solid polymer electrolyte.

7. The lithium-ion secondary battery according to claim 5 or 6,
wherein the lithium-ion secondary battery is a bipolar lithium-ion secondary battery (10).

8. An assembled battery, comprising:
a plurality of the lithium-ion secondary batteries (10, 60), each lithium-ion secondary battery (10, 60) according to any one of claims 5 to 7.

9. A vehicle, comprising:
the lithium-ion secondary battery (10, 60) according to any one of claims 5 to 7, the lithium-ion secondary battery (10, 60) serving as a motor-driving power supply.
